# EUROPÄISCHE PATENTSCHRIFT

(11) **EP 1 749 167 B1**
(45) Veröffentlichungstag und Bekanntmachung des Hinweises auf die Patenterteilung: **11.02.2009**
(21) Anmeldenummer: 05730745.6
(22) Anmeldetag: 13.04.2005
(51) Int. Cl.: F16L 37/088

(54) **VERFAHREN ZUR HERSTELLUNG EINER STECKVERBINDUNG**
METHOD FOR PRODUCTION OF A PLUG CONNECTION
PROCEDE POUR REALISER UNE FICHE DE CONNEXION

(30) Priorität: 23.04.2004 DE 102004019799
(43) Veröffentlichungstag der Anmeldung: 07.02.2007
(73) Patentinhaber: Henn GmbH & Co.KG, 6850 Dornbirn (AT)
(72) Erfinder: HARTMANN, Harald, A-6850 Dornbirn (AT)
(74) Vertreter: Riebling, Peter
(86) Internationale Anmeldenummer: PCT/EP2005/003859
(87) Internationale Veröffentlichungsnummer: WO 2005/103551

(56) Entgegenhaltungen:
- EP-A- 1 524 465
- DE-A1- 19 742 041
- DE-C1- 10 017 679
- US-A- 5 855 399

## Beschreibung

Die Erfindung betrifft ein Verfahren zur Herstellung einer Steckverbindung nach dem Oberbegriff des Patentanspruchs 1.

Derartige Steckverbindungen werden als flüssigkeits- und/oder luftdichte Verbindungen bevorzugt im Bereich des Kraftfahrzeugbaus verwendet. Als Beispiel wird angeführt, dass beispielsweise am Kühler eines Kraftfahrzeuges oder eines anderen Land-, Luft- oder Wasserfahrzeuges ein Stutzen angeformt ist, auf den mit Hilfe einer Rastverbindung ein Stecker dichtend aufgerastet und damit festgelegt wird.

Die Erfindung ist nicht auf die Herstellung von Steckverbindungen im Bereich des Fahrzeugbaus, ebenso auch nicht im Bereich der Land-, Luft- oder Wasserkraftfahrzeuge beschränkt. Es können sämtliche wasser- und/oder luftdichte Steckverbindungen verwendet werden.

Eine bekannte Steckverbindung der eingangs genannten Art ist durch eine Vielzahl älterer Anmeldungen des gleichen Anmelders beschrieben worden, so zum Beispiel durch die DE 19742041 A1.

Die bekannte Steckverbindung besteht im Wesentlichen aus einem Stutzen, der aus einem Kunststoff- oder Metallmaterial ist und der an seinem Außenumfang ein oder mehrere radial auswärtsgerichtete Rastschrägen aufweist.

Dieser Stutzen wird in den Innenraum eines Steckers eingeführt und am Stecker mit Hilfe einer oder mehrerer Rastfedern verrastet. Zur Herstellung der Dichtverbindung ist es bekannt, dass im Innenraum des Steckers eine Dichtschnur angeordnet ist, die auf einer zugeordneten, radial nach außen gerichteten Gegenfläche an einem axialen Schenkel des Stutzens zur Anlage kommt.

Der einfacheren Beschreibung wegen, wird in der folgenden Beschreibung davon ausgegangen, dass in den Innenraum eines außenliegenden Steckers ein entsprechender Stutzen eingesteckt wird. Hierauf ist die Erfindung jedoch nicht beschränkt. Sie kann auch die kinematische Umkehrung beinhalten, bei der in einen außenliegenden Stutzen ein innenliegender Stecker eingeschoben wird. Alle nachfolgend beschriebenen Verhältnisse sind dementsprechend in kinematischer Umkehrung anzupassen.

Bei der Herstellung derartiger Steckverbindungen besteht das Problem, den Dichtungsring (Formdichtring) einwandfrei an den Ort seiner Festlegung zu bringen und dort auch gegen Umkippen, Verformen, Verkanten und dergleichen zu schützen. Hierzu ist es bekannt, den Formdichtring in eine zugeordnete Dichtringnut einzuführen und einen zusätzlichen Sicherungsring zu verwenden, der den Formdichtring an mindestens einer Seite festhält. Der Sicherungsring wird dann im Presssitz eingefügt und gehalten.

Ebenso ist es bekannt, den Sicherungsring durch Einkleben oder Löten an den Ort der Montage zu bringen, um so den Formdichtring festzuhalten.

Es ist auch bekannt, eine insgesamt U-förmig profilierte Dichtringnut vorzusehen, wobei das U-Profil durch einen entsprechenden Umformvorgang im Bereich des Steckteils ausgebildet wird.

Die Anordnung derartiger U-Profilnuten sind jedoch sehr aufwendig, weil eine gute Maßhaltigkeit gefordert wird.

Aus diesem Grunde geht die Erfindung von einer Dichtringnut aus, die L-förmig profiliert ist, das heißt sie ist an einer axialen Seite offen. An dieser axialen Seite soll nun der Sicherungsring eingebracht werden.

Der Erfindung liegt deshalb die Aufgabe zugrunde, die Befestigung eines Formdichtrings in einer L-förmigen Nut an der Innenseite eines Steckteils so weiterzubilden, dass der Formdichtring mit besonders einfachen Maßnahmen mit Hilfe eines leicht zu montierenden Sicherungsrings am Ort seiner Montage festgelegt werden kann.

Zur Lösung der gestellten Aufgabe sieht die Erfindung ein im Anspruch 1 definiertes Verfahren vor, bei dem in einem ersten Verfahrensschritt der Formdichtring zusammen mit einem flachen, etwa rechteckförmig profilierten, umlaufenden Sicherungsring als Dichtungspaket in axialer Richtung in die in axialer Richtung geöffnete L-förmige Nut an der Innenseite des Steckteils eingebracht wird, in einem zweiten Verfahrensschritt wird mit Hilfe eines in axialer Richtung bewegten Drückwerkzeuges im Bereich der radialen Begrenzungswand der L-förmigen Dichtringnut Sicken erzeugt, die in Umfangsrichtung einen gegenseitigen Abstand voneinander einnehmen und welche die L-förmige Nut im Bereich ihrer axialen Öffnung mindestens teilweise verlegen und damit den Sicherungsring an seiner einen axialen Seite festlegen.

Damit werden bestimmte Querschnitte der Dichtringnut, die vorher einseitig offen waren, mindestens stellenweise am Umfang verteilt, radial einwärts verdrängt und begrenzen so das axiale Spiel des Sicherungsrings, der damit in Kontakt mit dem Formdichtring einwandfrei in der Dichtringnut gehalten wird.

Wesentliches Merkmal des erfindungsgemäßen Verfahrens ist also, dass mit einem Verformwerkzeug oder - in einer anderen Ausgestaltung - mit einem Durchbruchwerkzeug Teile der Dichtringnut dergestalt verformt werden, dass mindestens stellenweise am Umfang verteilt Teile der Dichtringnut in den in axialer Richtung offenen L-Querschnitt der Dichtringnut hineinverdrängt werden, um so den Sicherungsring festzuhalten.

Damit wird aus der L-förmigen Nut, die in axialer Richtung einseitig offen war, eine mindestens stellenweise geschlossene, U-förmig profilierte Nut ausgebildet.

Die in radialer Richtung einwärtsgerichteten Verformungen (Bördelsicken) legen somit den Sicherungsring an verschiedenen Stellen am Umfang verteilt in der Dichtungsnut fest und legen somit gleichzeitig auch den Formdichtring fest.

Mit dieser technischen Lehre ergibt sich der Vorteil, dass der Sicherungsring komplett rotationssymmetrisch ausgebildet sein kann und keinerlei Aussparungen hat oder sonstige zusätzliche Bearbeitungen erfährt.

Das Steckteil ist dadurch ebenfalls vollkommen rotationssymmetrisch und ist einfach herstellbar. Es sind keine Queroperationen oder Hinterschnitte erforderlich.

Das Steckteil benötigt demzufolge auch keinen axialen Anschlag für den Sicherungsring, was es fertigungstechnisch sehr vereinfacht und Länge spart.

Der Dichtring ist unabhängig von Toleranzen in der umlaufenden Dichtringnut spielfrei mit einer geringen Vorspannung eingebaut und wird vom Sicherungsring festgehalten. Dies macht einen Montageprozess des Steckerzusammenbaus mit dem Stutzen im anzuwendenden Werk vollkommen prozesssicher, weil kein Herausdrehen, Kippen oder unzulässiges Verformen des Formdichtringens mehr zu befürchten ist.

Die Toleranzabstimmung der Einzelteile (Dichtringnut, Formdichtring und Sicherungsring) wird stark vereinfacht. Der Sicherungsring kann sehr dünn ausgeführt werden und muss im Durchmesser nicht genau toleriert werden, wie dies bei einem Presssitz erforderlich wäre.

Hieraus ergibt sich der Vorteil, dass der Sicherungsring auch mit anderen Fertigungsmethoden gefertigt werden kann, wie zum Beispiel durch Winden oder Biegen. Dies bringt Material- und Fertigungseinsparungen.

Das Montieren des Dichtungspaktes und das Verstemmen der Dichtringnut erfolgt lediglich in einer einzigen axialen Fügerichtung. Damit werden kostenaufwendige, entgegengesetzte Montage- und Arbeitsvorgänge vermieden.

Die Verbindung ist sehr platzsparend, weil ein Sicherungsring mit sehr geringem Querschnitt verwendet werden kann. Es können unterschiedliche Materialpaarungen für das zu verformende Steckteil und den Sicherungsring verwendet werden, wobei das Steckteil eine bleibende plastische Verformung aufgrund der dort eingebrachten Bördelsicken erfährt.

Im Folgenden wird die Erfindung anhand von lediglich einen Ausführungsweg darstellenden Zeichnungen näher erläutert. Hierbei gehen aus den Zeichnungen und ihrer Beschreibung weitere Merkmale und Vorteile der Erfindung hervor.

Es zeigen:
- Figur 1:: perspektivische Ansicht einer Steckverbindung (teilweise aufgebrochen) mit eingebrachtem Dichtungspaket;
- Figur 2:: eine vergrößerte Schnittdarstellung durch das Steckteil der Steckverbindung nach Figur 1 vor Herstellung der Bördelsicken;
- Figur 3:: die gleiche Darstellung wie Figur 2 nach Herstellung der Bördelsicken;

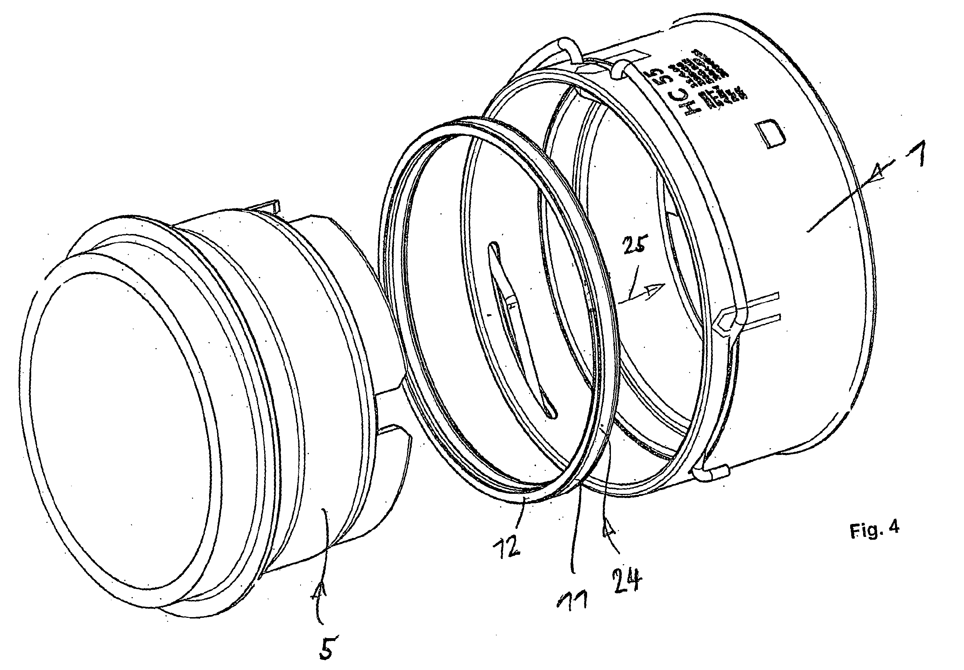

- Figur 4:: eine perspektivische Ansicht der Steckverbindung vor Montage des Dichtungspaketes.

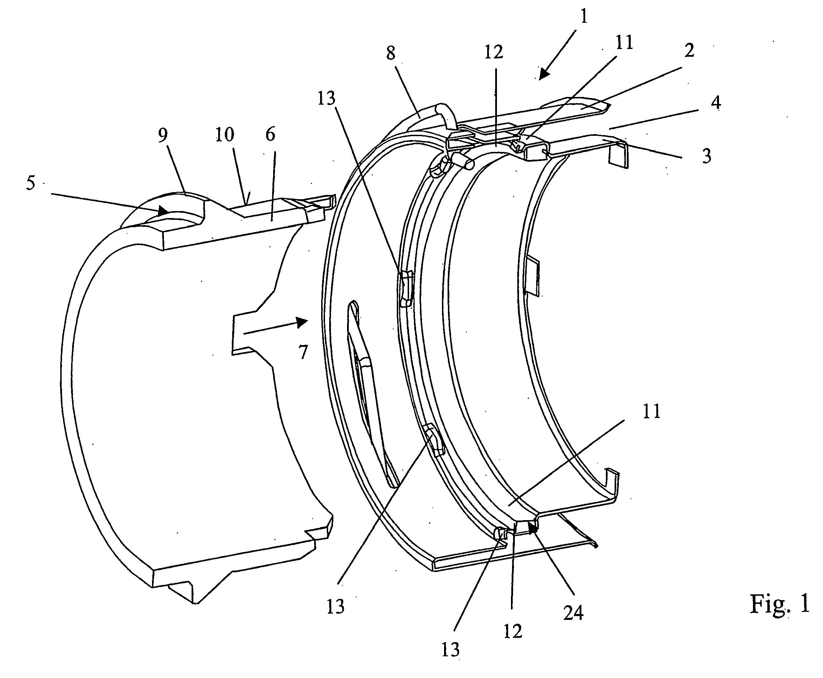

In Figur 1 besteht ein Steckteil 1 aus einer Außenhülse 2, die werkstoffeinstückig mit einer Innenhülse 3 verbunden ist. Die beiden Teile können auch werkstoffgetrennt voneinander ausgebildet sein, sind jedoch im gezeigten Ausführungsbeispiel miteinander verbunden. Die beiden Hülsen 2, 3 bilden zwischen sich einen Aufnahmeraum 4 zur Aufnahme eines Schlauches, der dort dichtend festgelegt ist.

Es kann auch vorgesehen sein, dass das Steckteil 1 mit dem daran ansetzenden Schlauch ein werkstoffeinstückiges Teil bildet.

Das Steckteil 1 wird in an sich bekannter Weise mit einem Stutzen 5 verrastet, der zu diesem Zweck an seinem Außenumfang eine radial nach außen vorstehende Rastschräge 9 aufweist und einen von der Rastschräge sich in axialer Richtung nach vorne erstreckenden Schenkel 6, der eine radial außenliegende Dichtfläche 10 ausbildet.

Die Herstellung der Steckverbindung wird beispielsweise dadurch erreicht, dass der Stutzen 5 in Pfeilrichtung 7 in den Innenraum des Steckteils 1 eingeführt wird, wobei die dort dargestellte Rastfeder 8 hinter der Rastschräge 9 des Stutzens 5 zur Anlage kommt.

Damit ist die Rastverbindung hergestellt, und im Innenraum des Steckteils 1 (im Bereich der Innenhülse 3) wird eine Dichtverbindung durch einen Formdichtring 11 hergestellt, der sich mit seinen vorstehenden elastomeren Querschnitten an der Dichtfläche 10 des Stutzens 5 dichtend anlegt.

Wichtig ist nun, dass die Dichtverbindung durch ein Dichtungspaket 24 hergestellt wird, was aus dem vorher genannten Formdichtring 11 in Verbindung mit einem in axialer Richtung daran anliegenden Sicherungsring 12 definiert wird.

Das erfindungsgemäße Verfahren besteht nun darin, in besonders einfacher und zuverlässiger Weise dieses Dichtungspaket 24 im Innenraum der Innenhülse 3 im Bereich der umlaufenden Dichtringnut 14 gegen axiale Verschiebung, Verkippen und Verklemmen festzusetzen.

Zu diesem Zweck werden aus bestimmten Querschnitten im Bereich der Innenhülse 3 Bördelsicken 13 heraus verformt, welche die vorbearbeitete, in axialer Richtung geöffnete, etwa L-förmig profilierte Dichtringnut 14 teilweise am Umfang umlaufend verschließt und hiermit eine teilweise U-förmig profilierte Dichtringnut 14 ausbildet.

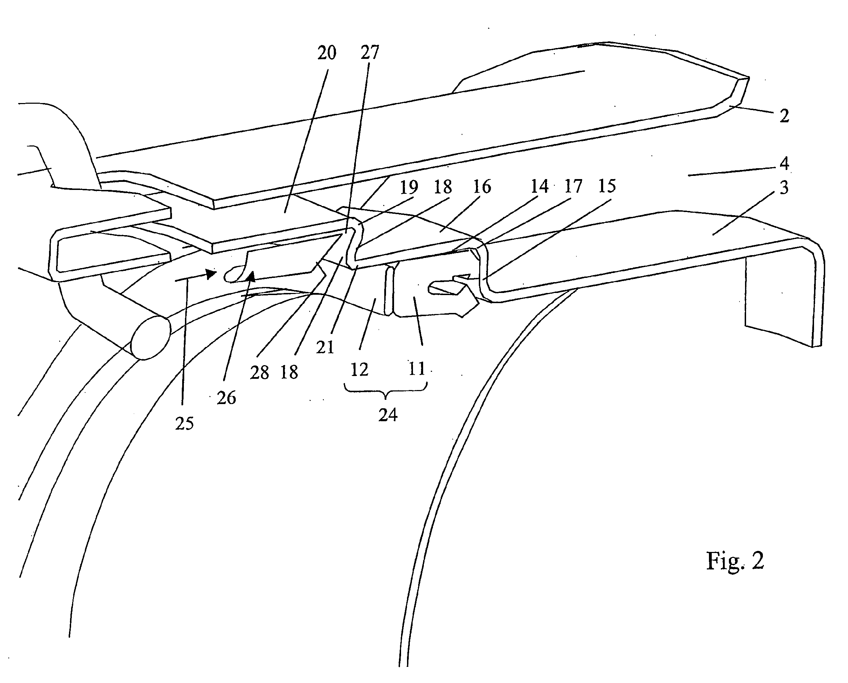

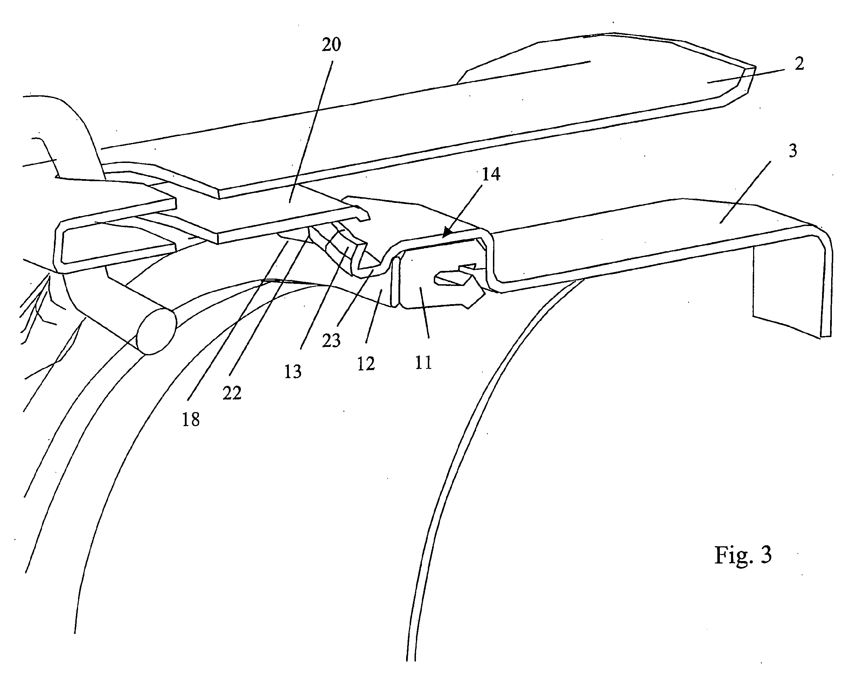

Einzelheiten dieses Verfahrens sind in Vergleich von Figur 2 zu Figur 3 erkennbar.

Es ist sichtbar, dass die Dichtringnut 14 durch einen radialen Schenkel 15 gebildet wird, der über eine Abbiegung 17 in einen sich daran anschließenden, axialen Schenkel 16 übergeht.

Dieser axiale Schenkel 16 bildet einen in axialer Richtung weisenden Überstand 21 aus, dessen Länge wesentlich größer ist als die axiale Länge von Formdichtring 11 und daran anliegendem Sicherungsring 12.

Von diesem Überstand 21 ausgehend wird über eine Abbiegung ein sich daran anschließender Schenkel 18 ausgeformt, der bevorzugt etwas in radialer Richtung angeschrägt ist.

Hierauf ist die Erfindung jedoch nicht beschränkt, der Schenkel 18 könnte auch genau in radialer Richtung ausgerichtet sein.

Von dem Schenkel 18 anschließend ergibt sich eine Abbiegung 19 und ein sich daran anschließender, axialer Schenkel 20.

Wichtig ist nun, dass das Dichtungspaket 24, aus Sicherungsring 12 und Formdichtring 11 bestehend, mittels eines Drückwerkzeuges 26 in der Dichtringnut 14 verschiebungssicher und lagengesichert festgelegt wird.

Hierzu wird ein Drückwerkzeug 26 in Pfeilrichtung 25 gegen den Schenkel 18 geführt.

Das Drückwerkzeug 26 bildet in Arbeitsrichtung eine vordere Schnittkante 27 aus, die bevorzugt in das Material des Schenkels 18 eindringt und dort einen Durchbruch 22 (Figur 3) ausbildet. Nach Einbringung dieses Durchbruches 22 verdrängt die in axialer Pfeilrichtung 25 schräg daran anschließende Schräge 28 des Drückwerkzeuges 26 das Material der herausgebildeten Bördelsicke 13 in radialer Richtung einwärts, so dass sich damit eine in radialer Richtung einwärtsgebogene Abbiegung 23 ergibt.

Die Figur 3 zeigt, dass diese Abbiegung 23 den Sicherungsring 12 in axialer Richtung nach hinten begrenzt und somit verschiebungsgesichert und lagensicher zusammen mit dem Formdichtring 11 festlegt.

Es wird noch darauf hingewiesen, dass das Drückwerkzeug 26 nicht lösungsnotwendige Durchbrüche 22 ausführen muss.

In einer anderen Ausgestaltung kann lediglich eine Verformung stattfinden in der Weise, dass Teile des Schenkels 18 radial einwärtsgerichtet im Sinne der Figur 3 verformt werden, ohne dass Durchbrüche 22 vorgesehen sind.

Es wird hierbei bevorzugt, wenn die vom Drückwerkzeug 26 im Bereich des Schenkels 18 ausgebildeten Bördelsicken 13 gleichmäßig am Umfang verteilt angeordnet sind. Hierauf ist die Erfindung jedoch nicht beschränkt.

Durch die Anbringung von Bördelsicken 13 an der einen Wandung des Sicherungsrings 12 wird dieser unabhängig von Toleranzen im Bereich der Dichtringnut 14 spielfrei mit einer geringen Vorspannung eingebaut.

Der Formdichtring 11 bildet somit das Gegenlager für das Drückwerkzeug und wird somit ebenfalls unter Vorspannung in der Dichtringnut 14 eingepasst. Daher können große Toleranzen bei der Herstellung der Dichtringnut 14 überbrückt werden.

Ebenso wird der Formdichtring so festgelegt, dass er nicht kippen oder in anderer Weise am Einbauort aus dem Steckteil entfernt werden kann oder herausfällt.

Damit ist das Dichtungspaket 24 unlösbar in dem Steckteil 1 integriert.

### Zeichnungslegende

- 1: Steckteil
- 2: Außenhülse
- 3: Innenhülse
- 4: Aufnahmeraum
- 5: Stutzen
- 6: Schenkel
- 7: Pfeilrichtung
- 8: Rastfeder
- 9: Rastschräge
- 10: Dichtfläche
- 11: Formdichtring
- 12: Sicherungsring
- 13: Bördelsicke
- 14: Dichtringnut
- 15: Schenkel
- 16: Schenkel
- 17: Abbiegung
- 18: Schenkel
- 19: Abbiegung
- 20: Schenkel
- 21: Überstand
- 22: Durchbruch
- 23: Abbiegung
- 24: Dichtungspaket
- 25: Pfeilrichtung
- 26: Drückwerkzeug
- 27: Schnittkante
- 28: Schräge

## Patentansprüche

1. Verfahren zur Herstellung einer Steckverbindung eines Steckteils (1) mit einem Stutzen (5) als flüssigkeits- und/oder luftdichte Verbindung, bevorzugt im Kraftfahrzeugbau, wobei das Steckteil (1) und der Stutzen (5) über einen in einer L-förmigen Dichtringnut (14) befindlichen Dichtring (11), insbesondere Formdichtring, zueinander abgedichtet werden, **dadurch gekennzeichnet, dass** in einem ersten Verfahrensschritt der Dichtring (11) zusammen mit einem Sicherungsring (12) als Dichtungspaket (24) in axialer Richtung in die in axialer Richtung geöffnete L-förmige Dichtringnut (14) eingebracht wird, und in einem zweiten Verfahrensschritt mit Hilfe eines in axialer Richtung bewegten Drückwerkzeuges (26) im Bereich einer radialen Begrenzungswand (18) der L-förmigen Dichtringnut (14) Sicken (13) erzeugt werden, die in Umfangsrichtung einen gegenseitigen Abstand voneinander einnehmen und welche die L-förmige Dichtringnut (14) im Bereich ihrer axialen Öffnung mindestens teilweise verlegen und damit den Sicherungsring (12) an seiner einen axialen Seite festlegen.

2. Verfahren nach Anspruch 1, **dadurch gekennzeichnet, dass** das Steckteil (1) und der Stutzen (5) miteinander verrasten, mit Hilfe einer oder mehrerer Rastfedern (8) an dem einen Teil (1 oder 5), die sich an einer Rastschräge (9) an dem anderen Teil (5 oder 1) anlegt/-en.

3. Verfahren nach Anspruch 1 oder 2, **dadurch gekennzeichnet, dass** der innenliegende Stutzen (5) in den Innenraum des außenliegenden Steckteils (1) eingesteckt wird und die Dichtringnut (14) an der Innenseite des Steckteils (1) eingebracht wird.

4. Verfahren nach Anspruch 1 bis 3, **dadurch gekennzeichnet, dass** der Dichtring (11) unabhängig von Toleranzen in der umlaufenden Dichtringnut (14) spielfrei mit einer geringen Vorspannung eingebaut und vom Sicherungsring (12) festgehalten wird.

5. Verfahren nach Anspruch 1 bis 4, **dadurch gekennzeichnet, dass** das Montieren des Dichtungspaktes (24) und das Verstemmen der Dichtringnut (14) lediglich in einer einzigen axialen Fügerichtung erfolgt.

## Claims

1. Method of making a plug connection between a socket part (1) and a nozzle (5) as a fluidtight and/or airtight joint, preferably in motor vehicle construction, wherein the socket part (1) and nozzle (5) are sealed from one another by a sealing ring (11), in particular a profiled sealing ring, located in an L-shaped sealing-ring groove (14), **characterized in that** in a first method step the sealing ring (11) together with a retaining ring (12) is inserted, as a seal package (24), in the axial direction into the axially open L-shaped sealing-ring groove (14), and in a second method step beads (13) are formed in the region of a radial boundary wall (18) of the L-shaped sealing-ring groove (14) with the aid of a press tool (26) moved in the axial direction, the said beads being spaced apart from one another in the circumferential direction and at least partly displacing the L-shaped sealing-ring groove (14) in the region of its axial opening thus securing the retaining ring (12) at its one axial side.

2. Method according to Claim 1, **characterized in that** the socket part (1) and nozzle (5) are snap-fastened to one another with the aid of one or more snap springs (8) on one part (1 or 5) that latch over a ramp (9) on the other part (5 or 1).

3. Method according to Claim 1 or Claim 2, **characterized in that** the internal nozzle (5) is plugged into the interior of the external socket part (1), and the sealing-ring groove (14) is on the inside of the socket part (1).

4. Method according to Claims 1 to 3, **characterized in that,** notwithstanding dimensional variation, the sealing ring (11) fits without play and with slight precompression, and is secured by the retaining ring (12), in the surrounding sealing-ring groove (14).

5. Method according to Claims 1 to 4, **characterized in that** the mounting of the seal package (24) and the caulking of the sealing-ring groove (14) are performed in a single axial jointing direction.

## Revendications

1. Procédé pour réaliser un raccord constitué d'un élément d'emboîtement (1) et d'une tubulure (5), comme raccord étanche au liquide et/ou à l'air, de préférence dans la construction automobile, l'élément d'emboîtement (1) et la tubulure (5) étant rendus étanche l'un par rapport à l'autre par l'intermédiaire d'une bague d'étanchéité (11), en particulier une bague d'étanchéité profilée, qui se trouve dans une rainure en L (14),
**caractérisé en ce que** lors d'une première étape, la bague d'étanchéité (11) est placée avec un jonc d'arrêt (12), sous la forme d'un paquet d'étanchéité (24), dans le sens axial, dans la rainure en L pour bague d'étanchéité (14) ouverte dans le sens axial, et lors d'une seconde étape, on produit dans la zone d'une paroi de délimitation radiale (18) de la rainure en L (14), à l'aide d'un outil de pression (26) déplacé dans le sens axial, des moulures (13) qui sont espacées les unes des autres dans le sens circonférentiel et qui bouchent au moins partiellement la rainure en L (14) dans la zone de son ouverture axiale et bloquent ainsi le jonc d'arrêt (12) sur un côté axial de celui-ci.

2. Procédé selon la revendication 1, **caractérisé en ce que** l'élément d'emboîtement (1) et la tubulure (5) s'enclenchent mutuellement à l'aide d'un ou plusieurs ressorts d'enclenchement (8) prévus sur l'un des éléments (1 ou 5) qui s'applique contre l'autre élément (5 ou 1) au niveau d'un biseau d'enclenchement (9).

3. Procédé selon la revendication 1 ou 2, **caractérisé en ce que** la tubulure intérieure (5) est introduite à l'intérieur de l'élément d'emboîtement extérieur (1) et la rainure pour bague d'étanchéité (14) est prévue sur le côté intérieur de l'élément d'emboîtement (1).

4. Procédé selon les revendications 1 à 3, **caractérisé en ce que** la bague d'étanchéité (11) est montée dans la rainure périphérique pour bague d'étanchéité (14) sans jeu et avec une faible contrainte, indépendamment de tolérances, et est bloquée par le jonc d'arrêt (12).

5. Procédé selon les revendications 1 à 4, **caractérisé en ce que** le montage du paquet d'étanchéité (24) et la réalisation de l'étanchéité de la rainure pour bague d'étanchéité (14) ne se font que dans un seul sens d'assemblage axial.
